# EUROPÄISCHE PATENTANMELDUNG

(11) **EP 1 418 537 A1**
(43) Veröffentlichungstag der Anmeldung: **12.05.2004**
(21) Anmeldenummer: 02405966.9
(22) Anmeldetag: 11.11.2002
(51) Int. Cl.: G06K 19/07

(54) **Elektronisches Gerät zum Austausch persönlicher Daten**

(71) Anmelder: La Vecchia, Nunzio, Dr., 6612 Ascona (CH)
(72) Erfinder: La Vecchia, Nunzio, Dr., 6612 Ascona (CH)
(74) Vertreter: Luchs, Willi

(57) **Zusammenfassung**

Ein elektronisches Gerät, insbesondere ein Patch, hat eine Energiequelle (17) und eine elektronische Schaltung, die einen programmierbaren, mit Speichermedien (2) versehenen Mikroprozessor (1) aufweist. Ausserdem ist das Gerät mit einer Antenne (4) und einem Sender und Empfänger (3) für ein Austauschen von Signalen in einem bestimmten, für einen begrenzten Raum vorgesehenen Frequenzbereich versehen. Das Gerät ist zum Austauschen von Daten, insbesondere von personenspezifischen Daten, zwischen zwei oder mehreren Benutzern vorgesehen und mit Eingabemitteln (10; 11; 12) zur Eingabe dieser Daten sowie mit einer Anzeige (14) versehen ist. Damit kann ein gezieltes Kontaktknüpfen zwischen zwei Personen ermöglicht werden.

## Beschreibung

Die Erfindung betrifft ein elektronisches Gerät, insbesondere ein Patch, mit einer Energiequelle, einer elektronischen Schaltung, die einen programmierbaren, mit Speichermedien versehenen Mikroprozessor aufweist, einer Antenne und einem Sender und Empfänger zum Austauschen von Signalen in einem bestimmten, für einen begrenzten Raum vorgesehenen Frequenzbereich; sowie ein Verfahren für die Bedienung und Funktion des Gerätes.

Bekannte elektronische Geräte, die insbesondere als Patchs bekannt sind, werden für verschiedene Zwecke verwendet, wie zum Beispiel zum Sichern von Gegenständen in Verkaufsgeschäften gegen Diebstahl, zum Öffnen von Garagentoren oder ähnlichem.

Ein solcher Patch funktioniert grundsätzlich derart, dass er innerhalb eines definierten Funkbereiches einen Funkkontakt mit einem Basis- oder einem Parallelgerät aufnimmt und dabei Signale sendet bzw. empfängt, mittels denen eine entsprechende Auslösung je nach Anwendung bewirkt wird.

Der vorliegenden Erfindung liegt die Aufgabe zugrunde, ein elektronisches Gerät, insbesondere ein Patch mit einem erweiterten Verwendungsbereich zu schaffen.

Diese Aufgabe ist erfindungsgemäss dadurch gelöst, dass das Gerät zum Austauschen von Daten, insbesondere von personenspezifischen Daten, zwischen zwei oder mehreren Benutzern vorgesehen ist und mit Eingabemitteln zur Eingabe dieser Daten sowie mit einer Anzeige versehen ist.

Weitere bevorzugte Ausgestaltungen des erfindungsgemässen Gerätes bilden den Gegenstand der abhängigen Ansprüche.

Dadurch, dass der Patch zum Austauschen von Daten, insbesondere von personenspezifischen Daten, zwischen zwei oder mehreren Benutzern vorgesehen und mit Eingabemitteln zur Eingabe dieser Daten sowie mit einer Anzeige versehen ist, wird beispielsweise ein gezieltes Kontaktknüpfen zwischen zwei oder mehreren, mit den erfindungsgemässen Patchs ausgerüsteten Personen ermöglicht.

Mit dem Versenden von bestimmten, insbesondere personenspezifischen Angaben, wird die Voraussetzung geschaffen, dass nur diejenigen SignalEmpfänger reagieren, welche bei ihrem Patch Daten gespeichert haben, die denen entsprechen, welche der Sender bei ihm eingegeben hat, d.h. die sich durch die empfangenen Datenangaben angesprochen fühlen.

Ein Ausführungsbeispiel sowie weitere Vorteile der Erfindung wird nachfolgend anhand der Zeichnung näher erläutert. Es zeigt:

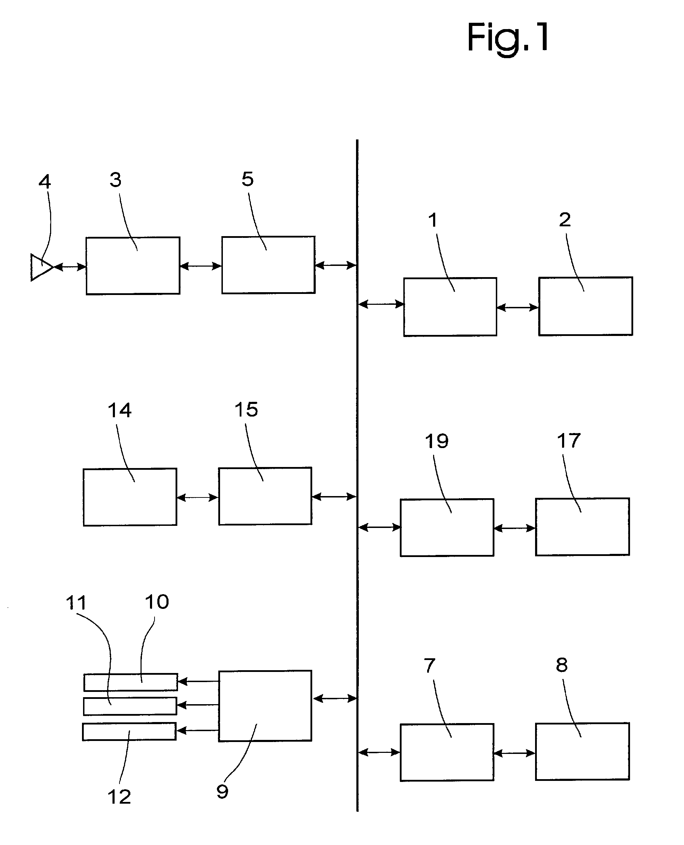

- Fig. 1: ein Blockschema einer möglichen Konfiguration eines erfindungsgemässen elektronischen Gerätes.

Fig.1 stellt eine mögliche System-Konfiguration für einen erfindungsgemässes elektronisches Gerät, insbesondere ein Patch dar, bei dem es sich um ein mobiles elektronisches Taschengerät, vorzugsweise in der Art eines Mobiltelefones handelt. Der Patch ist zum Austauschen von Daten, insbesondere von personenspezifischen Daten, zwischen zwei oder mehreren Benutzern vorgesehen. Die Datenübertragung kann über ein Funknetz - wie beispielsweise Bluetooth - erfolgen, wobei die Signale in einem bestimmten, für einen begrenzten Bereich vorgesehenen Frequenzbereich gesendet werden.

Der Patch verfügt gemäss Fig. 1 über eine elektronische Schaltung, die einen mit Speichermedien 2 versehenen, programmierbaren Mikroprozessor 1 umfasst. Für den Datenaustausch ist ein mit einer Antenne 4 versehener und an eine Kontrolleinheit 5 angeschlossener Sender und Empfänger 3 vorhanden. Im Gerät ist ferner eine Schnittstelle 7 für den Anschluss an einen externen Computer 8 integriert, über welchen der Mikroprozessor 1 programmierbar ist.

Der Patch ist mit an eine Kontrolleinheit 9 angeschlossenen Eingabemitteln ausgestattet, die als eine Tastatur 10, wie bei einem Mobiltelefon, als ein sogenannter Joy-Stick 11, eventuell mit einigen Tasten kombiniert, oder ein Sensorbildschirm 12, insbesondere ein Touch-Screen, ausgebildet sein können. Ferner weist der Patch eine mit einer Kontrolleinheit 15 wirkverbundene Anzeige 14 auf, die mit Vorteil als ein akustischer Tongeber und/oder ein LCD-Display (Liquid Crystal Display) ausgebildet sein kann. Ferner verfügt der Patch über eine mit einem Ein-/ und Ausschalter 19 verbindbare Energiequelle 17, die beispielsweise durch eine Batterie gebildet ist.

Mit dem erfindungsgemässen Patch wird beispielsweise ein gezieltes Kontaktknüpfen zwischen zwei oder mehreren Personen ermöglicht, die jeweils einen solchen Patch auf sich tragen.

Ein Benutzer kann daher in seinem Patch vorerst Daten eingeben, wie er selbst und wie sein Wunschpartner aussehen und/oder was er und sein Wunschpartner für Eigenschaften aufweisen sollen, indem die Alter, die Körpergrössen, die Haarfarben, Charaktereigenschaften, Hobbys und/oder andere Merkmale eingegeben werden.

Wenn nun dieser Benutzer ein solches erfindungsgemässes Patch mit den eingegebenen Daten auf sich trägt und beispielsweise auf der Strasse geht und sich eine andere Person mit ebenfalls einem solchen Patch in der Nähe aufhält, so vergleichen die Patchs automatisch die Daten, wobei der Sendebereich bis zu 50 oder gar 100 Metern Entfernung eingestellt sein kann. Wenn nun die bei diesem Benutzer eingegebenen Daten des Wunschpartners mit denjenigen der vorbeigehenden Person im wesentlichen übereinstimmen, so können die Patchs jeweils beispielsweise ein akustisches Signal erzeugen, so dass ein Kennenlernen zwischen diesen beiden Personen ermöglicht wird. Dies kann dann noch dadurch erleichtert werden, wenn ein Bild der anderen Person auf seinem vorgesehenen Display erscheint.

Selbstverständlich können die eingegebenen Daten zu dem Wunschpartner bestimmte oder vorzugsweise Bereiche umfassen. So kann beispielsweise das Alter zwischen einer unteren und einer oberen Grenze liegend eingegeben werden. Auch bezüglich der Eigenschaften kann der Patch derart ausgebildet sein, dass bei einem Vergleich von Eigenschaften nicht sämtliche Daten übereinstimmen müssen, sondern dass es auch dann zu einer Anzeige und damit zu einem Kennenlernen führen kann, wenn nur ein Teil dieser Eigenschaften mit den eingegebenen Daten übereinstimmen.

Die Erfindung ist mit dem oben erläuterten Ausführungsbeispiel ausreichend dargetan. Sie könnte jedoch noch in anderen Varianten veranschaulicht sein. So könnte dieses Gerät auch ein integrierter Bestandteil eines Mobiltelefones sein. Selbstverständlich könnten anstelle oder zusätzlich zu den oben aufgezählten Daten auch andere ausgetauscht werden, wie zum Beispiel Interessen in der Form nur von Hobbys, oder wenn jemand eine Person für eine Begleitung oder dergleichen sucht.

## Patentansprüche

1. Elektronisches Gerät, insbesondere ein Patch, mit einer Energiequelle (17), einer elektronischen Schaltung, die einen programmierbaren, mit Speichermedien (2) versehenen Mikroprozessor (1) aufweist, einer Antenne (4) und einem Sender und Empfänger (3) für ein Austauschen von Signalen in einem bestimmten, für einen begrenzten Raum vorgesehenen Frequenzbereich, **dadurch gekennzeichnet, dass**
das Gerät zum Austauschen von Daten, insbesondere von personenspezifischen Daten, zwischen zwei oder mehreren Benutzern vorgesehen und mit Eingabemitteln (10; 11; 12) zur Eingabe dieser Daten sowie mit einer Anzeige (14) versehen ist.

2. Gerät nach Anspruch 1, **dadurch gekennzeichnet, dass** eine im Patch integrierte Schnittstelle (7) für den Anschluss an einen externen Computer (8) vorhanden ist, über welchen der Mikroprozessor (1) programmierbar ist.

3. Gerät nach Anspruch 1 oder 2, **dadurch gekennzeichnet, dass** die Eingabemittel als eine Tastatur (10) und/oder ein Joy-Stick (11), oder ein Sensorbildschirm, insbesondere ein Touch-Screen (12) ausgebildet sind.

4. Gerät nach einem der Ansprüche 1 bis 3, **dadurch gekennzeichnet, dass** die Anzeige (14) als ein akustisches Signal erfolgtund/oder als ein LCD-Display ausgebildet ist.

5. Verfahren für die Bedienung und Funktion des Gerätes nach einem der Ansprüche 1 bis 4, **gekennzeichnet durch** folgende Merkmale:
- dass ein jeweiliger Benutzer als erstes in sein Gerät Daten eingibt, was er selbst für Eigenschaften hat und was sein Wunschpartner für Eigenschaften aufweisen soll,
- dass wenn dieser Benutzer das Gerät mit den eingegebenen Daten auf sich trägt und sich eine andere Person mit ebenfalls einem solchen Gerät in der Nähe aufhält, dass dann die Geräte automatisch die Daten vergleichen,
- und dass wenn nun die bei diesem Benutzer eingegebenen Daten bezüglich des Wunschpartners mit denjenigen einer in der Nähe befindlichen Person zumindest teilweise übereinstimmen, so können die Geräte jeweils beispielsweise ein akustisches Signal erzeugen, so dass ein Kennenlernen zwischen diesen beiden Personen ermöglicht wird.

6. Verfahren nach Anspruch 5, **dadurch gekennzeichnet, dass** die einzugebenden Daten, was der Benutzer und was sein Wunschpartner für Eigenschaften aufweisen sollen, aus dem Alter, der Körpergrösse, der Haarfarbe, der Charaktereigenschaften, der Hobbys und/oder anderen Daten zusammengesetzt sind.

7. Verfahren nach Anspruch 5 oder 6, **dadurch gekennzeichnet, dass** die eingegebenen Daten zu dem Wunschpartner bestimmte oder vorzugsweise Bereiche umfassen, beispielsweise kann das Alter zwischen einer unteren und einer oberen Grenze liegend eingegeben werden.

8. Verfahren nach einem der Ansprüche 5 bis 7, **dadurch gekennzeichnet, dass** das Gerät derart ausgebildet ist, dass bei einem Vergleich der Eigenschaften nicht sämtliche eingegebenen Daten übereinstimmen müssen, sondern dass es auch dann zu einer Anzeige und damit zu einem Kennenlernen führen kann, wenn nur ein Teil dieser Eigenschaften mit den eingegebenen Daten übereinstimmen.
